# EUROPEAN PATENT APPLICATION

(11) **EP 3 920 577 A1**
(43) Date of publication of application: **08.12.2021**
(21) Application number: 20747815.7
(22) Date of filing: 22.01.2020
(51) Int. Cl.: H04W 24/08, H04W 24/10

(54) **MEASUREMENT METHOD, TERMINAL, MEASUREMENT INDICATION METHOD, AND NETWORK SIDE DEVICE**

(30) Priority: 01.02.2019 CN 201910105409
(71) Applicant: VIVO MOBILE COMMUNICATION CO., LTD., Dongguan, Guangdong 523860 (CN)
(72) Inventor: CHEN, Li, Dongguan, Guangdong 523860 (CN)
(74) Representative: Winter, Brandl - Partnerschaft mbB
(86) International application number: PCT/CN2020/073792
(87) International publication number: WO 2020/156436

(57) **Abstract**

Embodiments of this disclosure provide a measurement method, a terminal, a measurement indication method, and a network-side device. The measurement method includes: receiving indication information transmitted by a network-side device; and determining a to-be-measured target object based on the indication information, where the indication information includes a first indication and/or a second indication, where the first indication is used to indicate a measurement determining threshold; and the second indication is used to indicate at least one of the following: a first target carrier in a target band, a first cell corresponding to a second target carrier, a second cell in a first target cell group, a third cell or a third target carrier for a first object, or a reference signal of the first object.

## Description

### CROSS-REFERENCE TO RELATED APPLICATIONS

This application claims priority to Chinese Patent Application No. 201910105409.2, filed in China on February 01, 2019, which is incorporated herein by reference in its entirety.

### TECHNICAL FIELD

This disclosure relates to the field of communications technologies, and in particular, to a measurement method, a terminal, a measurement indication method, and a network-side device.

### BACKGROUND

In the related art, in a scenario of configuring carrier aggregation (Carrier Aggregation, CA), a terminal needs to measure a secondary cell (Scell) configured by a network side, and report a measurement result to a network. The following describes cell measurement processes performed by the terminal in two different states: idle state and connected state.

### 1. S-measure in idle state

In long term evolution (Long Term Evolution, LTE)/new radio (New Radio, NR) systems, configurations related to measurements in an idle state and conditions to trigger neighboring cell measurements are defined in TS 304 idle state protocols.

In determining whether to perform a measurement on an intra-frequency (intra-frequency) neighboring cell for cell selection/reselection, if a serving cell meets a condition that reception performance of the serving cell (for example, reference signal received power (Reference Signal Received Power, RSRP) and reference signal received quality (Reference Signal Received Quality, RSRQ)) is greater than a preset threshold (for example, Srxlev>SIntraSearchP and Squal>SIntraSearchQ), the terminal selects not to perform the measurement on the intra-frequency neighboring cell. If the reception performance is lower than the threshold, the measurement on the intra-frequency neighboring cell needs to be performed.

For inter-frequency and inter-radio access technology (Inter-RAT) scenarios, when a neighboring cell has a priority higher than that of a current serving frequency and radio access technology (Radio Access Technology, RAT), the terminal performs a neighboring cell measurement according to measurement requirements defined in the TS 36.133 protocol. When a neighboring cell has a priority equal to or lower than that of a current serving frequency and RAT, if the serving cell meets a condition that reception performance of the serving cell (for example, RSRP and RSRQ) is greater than a preset threshold (for example, Srxlev>SIntraSearchP and Squal>SIntraSearchQ), the UE selects not to perform the neighboring cell measurement; and if the reception performance is lower than the threshold, the neighboring cell measurement needs to be performed.

The neighboring cell measurement threshold is optionally configured on a network side, and if not configured, the TS 36.133 protocol defines that a neighboring cell measurement is triggered when the measurement results for the current cell do not meet criterion S for multiple consecutive times.

### 2. S-measure in idle state

Similarly, when the terminal is in a connected state, if a measured RSRP for a secondary primary cell SpCell is lower than a threshold configured by S-measure, the terminal needs to start a measurement on a non-serving (non-serving) cell.

In the related art, the terminal needs to measure all configured Scells and report measurement results, such that the terminal consumes much power.

### SUMMARY

Embodiments of this disclosure provide a measurement method, a terminal, a measurement indication method, and a network-side device, to resolve the problem that a terminal consumes much power.

According to a first aspect, an embodiment of this disclosure provides a measurement method, applied to a terminal and including:
receiving indication information transmitted by a network-side device; and
determining a to-be-measured target object based on the indication information, where
the indication information includes a first indication and/or a second indication, where
the first indication is used to indicate a measurement determining threshold; and
the second indication is used to indicate at least one of the following:
   a first target carrier in a target band;
   a first cell corresponding to a second target carrier;
   a second cell in a first target cell group;
   a third cell or a third target carrier for a first object, where the first object is a primary cell Pcell, a secondary cell Scell, a primary secondary cell Pscell, or a secondary primary cell Spcell; or
   a reference signal of the first object.

According to a second aspect, an embodiment of this disclosure provides a measurement indication method, applied to a network-side device and including:
transmitting indication information to a terminal, where the indication information is used to indicate the terminal to determine a to-be-measured target object based on the indication information, where
the indication information includes a first indication and/or a second indication, where
the first indication is used to indicate a measurement determining threshold; and
the second indication is used to indicate at least one of the following:
   a first target carrier in a target band;
   a first cell corresponding to a second target carrier;
   a second cell in a first target cell group;
   a third cell or a third target carrier for a first object, where the first object is a primary cell Pcell, a secondary cell Scell, a primary secondary cell Pscell, or a secondary primary cell Spcell; or
   a reference signal of the first object.

According to a third aspect, an embodiment of this disclosure provides a terminal, including:
a receiving module, configured to receive indication information transmitted by a network-side device; and
a determining module, configured to determine a to-be-measured target object based on the indication information, where
the indication information includes a first indication and/or a second indication, where
the first indication is used to indicate a measurement determining threshold; and
the second indication is used to indicate at least one of the following:
   a first target carrier in a target band;
   a first cell corresponding to a second target carrier;
   a second cell in a first target cell group;
   a third cell or a third target carrier for a first object, where the first object is a primary cell Pcell, a secondary cell Scell, a primary secondary cell Pscell, or a secondary primary cell Spcell; or
   a reference signal of the first object.

According to a fourth aspect, an embodiment of this disclosure provides a network-side device, including:
a transmitting module, configured to transmit indication information to a terminal, where the indication information is used to indicate the terminal to determine a to-be-measured target object based on the indication information, where
the indication information includes a first indication and/or a second indication, where
the first indication is used to indicate a measurement determining threshold; and
the second indication is used to indicate at least one of the following:
   a first target carrier in a target band;
   a first cell corresponding to a second target carrier;
   a second cell in a first target cell group;
   a third cell or a third target carrier for a first object, where the first object is a primary cell Pcell, a secondary cell Scell, a primary secondary cell Pscell, or a secondary primary cell Spcell; or
   a reference signal of the first object.

According to a fifth aspect, an embodiment of this disclosure provides a terminal, including a memory, a processor, and a program stored in the memory and capable of running on the processor, where when the program is executed by the processor, the steps of the foregoing measurement method are implemented.

According to a sixth aspect, an embodiment of this disclosure provides a network-side device, including a memory, a processor, and a program stored in the memory and capable of running on the processor, where when the program is executed by the processor, the steps of the foregoing measurement indication method are implemented.

According to a seventh aspect, an embodiment of this disclosure provides a computer-readable storage medium, where a computer program is stored in the computer-readable storage medium. When the computer program is executed by a processor, the steps of the foregoing measurement method on a terminal side are implemented, or when the computer program is executed by a processor, the steps of the foregoing measurement indication method on a network-side device are implemented.

In the embodiments of this disclosure, indication information transmitted by a network-side device is received, and a to-be-measured target object is determined based on the indication information, so that a measurement can be performed on the specified target object. In a case that a movement state or a service state of a terminal does not change or does not change much, measurements can be performed on the target object, thereby properly reducing the number of measurement cells. Therefore, electrical energy consumption of the terminal is reduced in the embodiments of this disclosure.

### BRIEF DESCRIPTION OF DRAWINGS

FIG. 1 is a structural diagram of a network system to which an embodiment of this disclosure may be applied;
FIG. 2 is a first flowchart of a measurement method according to an embodiment of this disclosure;
FIG. 3 is a second flowchart of a measurement method according to an embodiment of this disclosure;
FIG. 4 is a first structural diagram of a terminal according to an embodiment of this disclosure;
FIG 5 is a first structural diagram of a network-side device according to an embodiment of this disclosure;
FIG 6 is a second structural diagram of a terminal according to an embodiment of this disclosure; and
FIG. 7 is a second structural diagram of a network-side device according to an embodiment of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are some rather than all of the embodiments of this disclosure. All other embodiments obtained by a person of ordinary skill in the art based on the embodiments of this disclosure without creative efforts shall fall within the protection scope of this disclosure.

Terms "include", "comprise" and any other variants thereof in the specification and claims of the application are intended to cover the non-exclusive inclusion. For example, a process, method, system, product, or device that includes a series of steps or units is not necessarily limited to those expressly listed steps or units, but may include other steps or units not expressly listed or inherent to such process, method, system, product, or device. Moreover, use of "and/or" in the specification and claims represents at least one of the connected objects. For example, A and/or B means three cases: A alone, B alone, or A and B together.

In the embodiments of this disclosure, the terms such as "an example" or "for example" are used to represent an example, an illustration, or a description. Any embodiment or design solution described as "an example" or "for example" in the embodiments of this disclosure should not be construed as being more preferred or advantageous than other embodiments or design solutions. To be precise, the terms such as "example" or "for example" are intended to present a related concept in a specific manner.

The following describes embodiments of this disclosure with reference to the accompanying drawings. A measurement method, a network-side device, and a terminal provided in the embodiments of this disclosure may be applied to a wireless communications system. The wireless communications system may be a 5G system, or an evolved long term evolution (Evolved Long Term Evolution, eLTE) system, or a later evolved communications system.

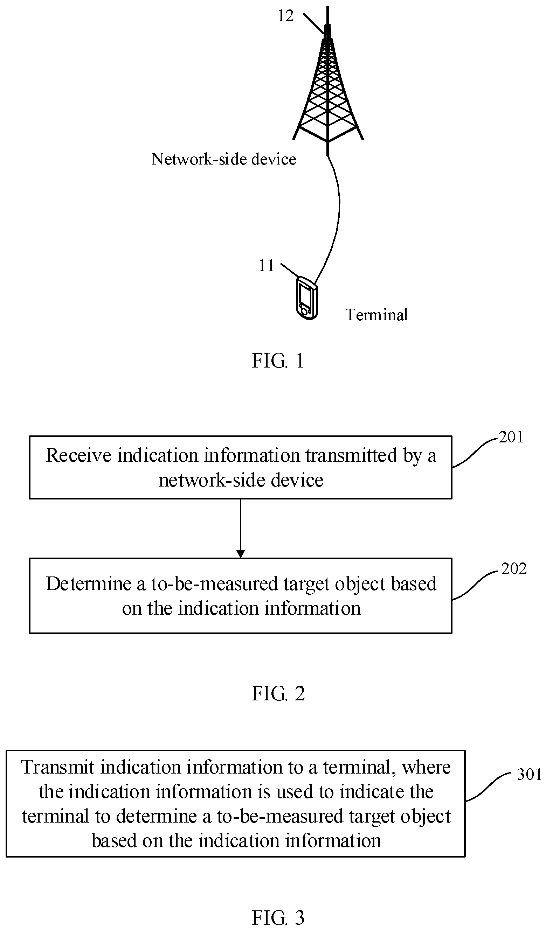

FIG. 1 is a structural diagram of a network system to which an embodiment of this disclosure may be applied. As shown in FIG. 1, the network system includes a terminal 11 and a network-side device 12. The terminal 11 may be user terminal or other terminal-side devices such as a mobile phone, a tablet personal computer (Tablet Personal Computer), a laptop computer (Laptop Computer), a personal digital assistant (personal digital assistant, PDA), a mobile Internet device (Mobile Internet Device, MID), or a wearable device (Wearable Device). It should be noted that a specific type of the terminal 11 is not limited in the embodiments of this disclosure. The network-side device 12 may be a 5G base station, a base station of a later version, or a base station in other communications systems, or may be referred to as a NodeB, an evolved NodeB, a transmission reception point (Transmission Reception Point, TRP), an access point (Access Point, AP), or other terms in the field. As long as a same technical effect is achieved, the network-side device is not limited to a specific technical term. In addition, the network-side device 12 may be a master node (Master Node, MN) or a secondary node (Secondary Node, SN). It should be noted that, in the embodiments of this disclosure, the 5G base station is used as only an example, but the network-side device is not limited to any specific type.

FIG. 2 is a flowchart of a measurement method according to an embodiment of this disclosure. The method is applied to a terminal, and includes the following steps, as shown in FIG. 2.

Step 201: Receive indication information transmitted by a network-side device.

Step 202: Determine a to-be-measured target object based on the indication information.

The measurement method provided in this embodiment of this disclosure is mainly applied to a terminal and controls a measurement performed by the terminal. The network-side device may transmit the indication information to the terminal through higher-layer signaling, where the indication information is used to indicate the terminal to determine a to-be-measured target object.

Specifically, content of the indication information may be set depending on an actual need. For example, in this embodiment, the indication information may include a first indication and/or a second indication, where
the first indication is used to indicate a measurement determining threshold; and
the second indication is used to indicate at least one of the following:
   a first target carrier in a target band;
   a first cell corresponding to a second target carrier;
   a second cell in a first target cell group;
   a third cell or a third target carrier for a first object, where the first object is a primary cell Pcell, a secondary cell Scell, a primary secondary cell Pscell, or a secondary primary cell Spcell; or
   a reference signal (Reference Signal, RS) of the first object.

It should be noted that there may be one or more second indications. In this embodiment, manners for indicating the first target carrier on the target band may specifically include:
Manner 1: indicating carriers in one or more bands by using one second indication; and
Manner 2: indicating multiple carriers of multiple bands by using multiple second indications, where each of the second indications is used to indicate carriers in one band.

In addition, for manners for indicating the first cell corresponding to the second target carrier, the second cell in the first target cell group, the third cell or the third target carrier for the first object, and the reference signal of the first object, reference may be made to Manner 1 and Manner 2. Details are not described herein again.

Alternatively, all content that needs to be indicated by using a second indication may be indicated in one second indication.

The first target carrier may a specific carrier in a target band. In this embodiment, a measurement result of the first target carrier can be used to represent a measurement result of the target band, which means only one carrier is measured for one band.

The first cell corresponding to the second target carrier may be a specific cell corresponding to the second target carrier. In this embodiment, a measurement result of the first cell can be used to represent a measurement result of the second target carrier, which means only one cell is measured for one carrier.

The third cell or the third target carrier for the first object may be a specific cell or carrier in the first object. In this embodiment, a measurement result of the third cell or the third target carrier can be used to represent a measurement result of the first object, which means only one cell or carrier is measured for one first object.

A measurement result of the reference signal may represent a measurement result of the first object, which means only one reference signal is measured for the first object.

It should be noted that in an optional embodiment, the target object may include at least one of the following:
a band or a reference signal on a band;
a carrier or a reference signal on a carrier;
a cell or a reference signal on a cell;
a bandwidth part (Band Width Part, BWP) or a reference signal on a BWP; or
a reference signal.

In an optional embodiment, the cell or the reference signal on the cell may include at least one of the following:
a secondary cell or a reference signal on a secondary cell;
a first target cell or a reference signal on a first target cell, where the first target cell is a Pcell, a Pscell, or a Spcell; or
a secondary cell group or a reference signal on a secondary cell group.

Specifically, the secondary primary cell Spcell includes a primary cell Pcell and a primary secondary cell Pscell.

In the embodiments of this disclosure, indication information transmitted by a network-side device is received, and a to-be-measured target object is determined based on the indication information, so that a measurement can be performed on the specified target object. In a case that a movement state or a service state of a terminal does not change or does not change much, measurements can be performed on the target object, thereby properly reducing the number of measurement cells. Therefore, electrical energy consumption of the terminal is reduced in the embodiments of this disclosure.

It should be noted that to-be-measured target objects vary with different content indicated by the second indication. The detailed description is as follows.
Scheme 1: When a first target carrier in a target band is indicated by using a second indication, the to-be-measured target object includes at least one of the following:
   a band or a reference signal on a band; or
   a carrier or a reference signal on a carrier.
Scheme 2: When a first cell corresponding to a second target carrier is indicated by using a second indication, the target object includes at least one of the following:
   a carrier or a reference signal on a carrier;
   a cell or a reference signal on a cell; or
   a bandwidth part BWP or a reference signal on a BWP.
Scheme 3: When a second cell in a first target cell group is indicated by using a second indication, the target object includes at least one of the following:
   a cell group or a reference signal on a cell group;
   a cell or a reference signal on a cell; or
   a bandwidth part BWP or a reference signal on a BWP.
Scheme 4: When a third cell or a third target carrier for a first object is indicated by using a second indication, the target object includes at least one of the following:
   a cell or a reference signal on a cell;
   a carrier or a reference signal on a carrier; or
   a bandwidth part BWP or a reference signal on a BWP.
Scheme 5: When a reference signal of the first object is indicated by using a second indication, the first target object includes at least one of the following:
   a reference signal.

Further, the indication information may include different content, and the corresponding operation performed in the step 202 is also different. The detailed description is as follows.

For example, in an optional implementation, when the indication information includes the first indication, the determining a to-be-measured target object based on the indication information includes any one of the following:
Manner 1: in a case that measured performance of a current serving second object is lower than the measurement determining threshold, performing or skipping performing a measurement on a third object prescribed by a protocol or configured by a network-side device, where the second object includes a current serving cell, Pcell, SPcell, master cell group MCG, secondary cell group SCG, band, carrier, or BWP; and the third object includes a cell, a band, a carrier, or a BWP;
Manner 2: in a case that test performance of a configured second target cell is lower than the measurement determining threshold, performing or skipping performing a measurement on a cell prescribed by a protocol or configured by a network-side device other than the second target cell; or
Manner 3: in a case that measured performance of cells in a configured second target cell group is lower than the measurement determining threshold, performing or skipping performing measurements on cells in a cell group prescribed by a protocol or configured by a network-side device other than the second target cell group.

In Manner 1, the second object and the third object have a correspondence, and the second object is different from the third object. Specifically, when the second object is a current serving cell, Pcell, SPcell, MCG, or SCG, the third object is a cell prescribed by a protocol or configured by a network-side device; when the second object is a current serving band, the third object is a band prescribed by a protocol or configured by a network-side device; when the second object is a current serving carrier, the third object is a carrier prescribed by a protocol or configured by a network-side device; and when the second object is a current serving BWP, the third object is a BWP prescribed by a protocol or configured by a network-side device.

In Manner 2, the second target cell may be an active Scell or any one of active Scells.

In Manner 3, the second target cell may be an active Scell or any one of active Scells.

In this implementation, the measured performance includes any one of the following: a reference signal received power RSRP, RSRQ, a signal to interference plus noise ratio (Signal-to-Noise and Interference Ratio) SINR, channel state information (Channel State Information, CSI), a channel quality indication (Channel quality indicator, CQI), an L1 measurement result, or an L3 measurement result.

L1 represents a transport layer 1, and L3 represents a transport layer 2.

In another optional implementation, when the indication information includes the second indication, the determining a to-be-measured target object based on the indication information includes:
performing or skipping performing a measurement on the target band, the second target carrier, the first target object, the first target cell group, and the reference signal indicated in the second indication.

In still another optional implementation, when the indication information includes the first indication and the second indication, the determining a to-be-measured target object based on the indication information includes:
in a case that a preset condition is met, performing or skipping performing a measurement on the target band, the second target carrier, the first target object, the first target cell group, and the reference signal indicated in the second indication, where
the preset condition includes any one of the following:
   measured performance of a current serving second object is lower than the measurement determining threshold, where the second object includes a current serving cell, Pcell, SPcell, MCG, SCG, band, carrier, or BWP;
   test performance of a configured second target cell is lower than the measurement determining threshold; or
   measured performance of a cell in a configured second target cell group is lower than the measurement determining threshold.

Further, after the determining a to-be-measured target object based on the indication information, the method further includes at least one of the following:
performing at least one of L1, L2, and L3 measurements on the target obj ect;
performing L3 filtering for a measurement result of the target object; or
performing cell- and/or beam-level reporting of a measurement result of the target object.

It should be noted that various optional implementations described in this embodiment of this disclosure may be implemented in combination or may be implemented independently, which is not limited in this embodiment of this disclosure.

To help better understand this disclosure, the following describes in detail a specific example.

A terminal receives indication information transmitted by a network-side device, and determines a to-be-measured target object based on the indication information, where
the indication information includes at least one of the following:
1. a measurement determining threshold;
2. at least one indication, where the indication indicates one carrier in a band, and that a measurement result of the carrier can represent a measurement result of the band, or only one carrier is measured for one band;
3. at least one indication, where the indication indicates a cell corresponding to a carrier, and that a measurement result of the cell can represent a measurement result of the carrier, or only one cell is measured for one carrier;
4. at least one indication, where the indication indicates one cell in a CG (SCG or MCG), and that a measurement result of the cell can represent a measurement result of the CG, or only one cell is measured for one CG;
5. at least one indication, where the indication indicates that a measurement result of one cell/carrier can represent a measurement result of a Pcell/Scell/Pscell/Spcell, or only one cell/carrier is measured for one Pcell/Scell/Pscell/Spcell; or
6. at least one indication, where the indication indicates that a measurement result of one reference signal can represent a measurement result of the cell/Pcell/Scell/Pscell/Spcell, or only one reference signal is measured for one Pcell/Scell/Pscell/Spcell.

The to-be-measured target object includes at least one of the following:
1. a to-be-measured band or a reference signal on the band;
2. a to-be-measured carrier or a reference signal on the carrier;
3. a to-be-measured cell or a reference signal on the cell, which specifically includes at least one of the following:
   (a): a to-be-measured Scell or a reference signal on the Scell;
   (b): a to-be-measured Pcell/Pscell/Spcell or a reference signal on the Pcell/Pscell/Spcell; or
   (c): a to-be-measured SCG or a reference signal on the SCG;
4. a to-be-measured BWP or a reference signal on the BWP; or
5. a to-be-measured reference signal.

The determining a to-be-measured target object based on the indication information includes any one of the following three cases.
Case 1: The indication information includes a measurement determining threshold, and the determining a to-be-measured target object based on the indication information includes any one of the following:
   (a) if measured performance of a current serving cell/Pcell/SpCell/MCG/SCG/band/carrier/BWP is lower than the measurement determining threshold, performing a measurement on another cell/band/carrier/BWP that is preset or configured;
   (b) if measured performance of a current serving cell/Pcell/SpCell/MCG/SCG/band/carrier/BWP is higher than the measurement determining threshold, skipping performing a measurement on another cell/band/carrier/BWP that is preset or configured;
   (c) if measured performance of a configured Scell (for example, an active Scell or any one of active Scells) is lower than the measurement determining threshold, performing a measurement on another Scell that is preset or configured;
   (d) if measured performance of a configured Scell (for example, an active Scell or any one of active Scells) is higher than the measurement determining threshold, skipping performing a measurement on another Scell that is preset or configured;
   (e) if measured performance of a cell (for example, an active cell or any one of active cells) in a configured SCG or MCG is lower than the measurement determining threshold, performing a measurement on a Cell in the preset or configured SCG or MCG; or
   (f) if measured performance of a Cell (for example, an active cell or any one of active cells) in a configured SCG or MCG is higher than the measurement determining threshold, skipping performing a measurement on a Cell in the preset or configured SCG or MCG

   The measured performance includes at least one of an RSRP, an RSRQ, an SINR, CSI, a CQI, an L1 measurement result, or an L3 measurement result.
Case 2: The indication information includes at least one of the indications in 2, 3, 4, and 5, and the determining a to-be-measured target object based on the indication information includes: performing, by a terminal, a measurement on a band/carrier/cell/CG/RS indicated in the indication information.
Case 3: The indication information includes at least one of the indications in 2, 3, 4 and 5 and a measurement determining threshold, and the determining a to-be-measured target object based on the indication information includes:
   (a) if measured performance of a current serving cell/Pcell/SpCell/MCG/SCG/band/carrier/BWP is lower than the measurement determining threshold, performing, by the terminal, a measurement on the band/carrier/cell/CG/RS indicated in the indication information;
   (b) if measured performance of a current serving cell/Pcell/SpCell/MCG/SCG/band/carrier/BWP is higher than the measurement determining threshold, skipping performing, by the terminal, a measurement on the band/carrier/cell/CG/RS indicated in the indication information;
   (c) if measured performance of a configured Scell (for example, an active Scell or any one of active Scells) is lower than the measurement determining threshold, performing, by the terminal, a measurement on the band/carrier/cell/CG/RS indicated in the indication information;
   (d) if measured performance of a configured Scell (for example, an active Scell or any one of active Scells) is higher than the measurement determining threshold, skipping performing, by the terminal, a measurement on the band/carrier/cell/CG/RS indicated in the indication information;
   (e) if measured performance of a Cell (for example, an active cell or any one of active cells) in a configured SCG or MCG is lower than the measurement determining threshold, performing, by the terminal, a measurement on the band/carrier/cell/CG/RS indicated in the indication information; or
   (f) if measured performance of a Cell (for example, an active cell or any one of active cells) in a configured SCG or MCG is higher than the measurement determining threshold, skipping performing, by the terminal, a measurement on the band/carrier/cell/CG/RS indicated in the indication information.

It should be understood that whether to perform a measurement on a target object specifically includes at least one of the following:
1. whether an L1, L2, or L3 measurement is to be performed on the target obj ect;
2. whether L3 filtering is to be performed for a measurement result of the target object; or
3. whether cell- and/or beam-level reporting of a measurement result of the target object is to be performed.

FIG. 3 is a flowchart of another measurement indication method according to an embodiment of this disclosure. The method is applied to a network-side device, and includes the following steps, as shown in FIG. 3.

301. Transmit indication information to a terminal, where the indication information is used to indicate the terminal to determine a to-be-measured target object based on the indication information, where
the indication information includes a first indication and/or a second indication, where
the first indication is used to indicate a measurement determining threshold; and
the second indication is used to indicate at least one of the following:
   a first target carrier in a target band;
   a first cell corresponding to a second target carrier;
   a second cell in a first target cell group;
   a third cell or a third target carrier for a first object, where the first object is a primary cell Pcell, a secondary cell Scell, a primary secondary cell Pscell, or a secondary primary cell Spcell; or
   a reference signal of the first object.

Optionally, the target object includes at least one of the following:
a band or a reference signal on a band;
a carrier or a reference signal on a carrier;
a cell or a reference signal on a cell;
a bandwidth part BWP or a reference signal on a BWP; or
a reference signal.

Optionally, the cell or the reference signal on the cell includes at least one of the following:
a secondary cell or a reference signal on a secondary cell;
a first target cell or a reference signal on a first target cell, where the first target cell is a primary cell Pcell, a primary secondary cell Pscell, or a secondary primary cell Spcell; or
a secondary cell group or a reference signal on a secondary cell group.

Optionally, the indication information includes a first indication and/or a second indication, where
the first indication is used to indicate a measurement determining threshold.

Optionally, a measurement result of the first target carrier represents a measurement result of the target band; or
a measurement result of the first cell represents a measurement result of the second target carrier; or
a measurement result of the second cell represents a measurement result of the first target cell group; or
a measurement result of the third cell, the third target carrier, or the reference signal represents a measurement result of the first object.

It should be noted that for this embodiment is an embodiment of the network-side device corresponding to the embodiment shown in FIG 2, and for specific implementations of this embodiment, reference may be made to the relevant descriptions about the embodiment shown in FIG 2, and the same beneficial effect is achieved. To avoid repetition, details are not described herein again.

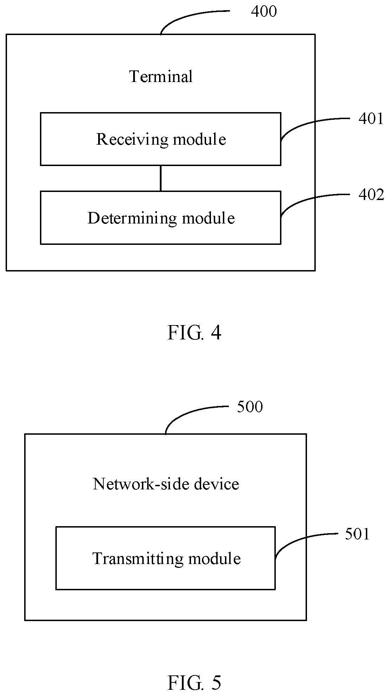

FIG. 4 is a structural diagram of a terminal according to an embodiment of this disclosure. As shown in FIG. 4, the terminal 400 includes:
a receiving module 401, configured to receive indication information transmitted by a network-side device; and
a determining module 402, configured to determine a to-be-measured target object based on the indication information, where
the indication information includes a first indication and/or a second indication, where
the first indication is used to indicate a measurement determining threshold; and
the second indication is used to indicate at least one of the following:
   a first target carrier in a target band;
   a first cell corresponding to a second target carrier;
   a second cell in a first target cell group;
   a third cell or a third target carrier for a first object, where the first object is a primary cell Pcell, a secondary cell Scell, a primary secondary cell Pscell, or a secondary primary cell Spcell; or
   a reference signal of the first object.

Optionally, the target object includes at least one of the following:
a band or a reference signal on a band;
a carrier or a reference signal on a carrier;
a cell or a reference signal on a cell;
a bandwidth part BWP or a reference signal on a BWP; or
a reference signal.

Optionally, the cell or the reference signal on the cell includes at least one of the following:
a secondary cell or a reference signal on a secondary cell;
a first target cell or a reference signal on a first target cell, where the first target cell is a primary cell Pcell, a primary secondary cell Pscell, or a secondary primary cell Spcell; or
a secondary cell group or a reference signal on a secondary cell group.

Optionally, a measurement result of the first target carrier represents a measurement result of the target band; or
a measurement result of the first cell represents a measurement result of the second target carrier; or
a measurement result of the second cell represents a measurement result of the first target cell group; or
a measurement result of the third cell, the third target carrier, or the reference signal represents a measurement result of the first object.

Optionally, when the indication information includes the first indication, the determining module 402 is specifically configured to perform at least one of the following:
in a case that measured performance of a current serving second object is lower than the measurement determining threshold, perform or skip performing a measurement on a third object prescribed by a protocol or configured by a network-side device, where the second object includes a current serving cell, Pcell, SPcell, master cell group MCG, secondary cell group SCG, band, carrier or BWP; and the third object includes a cell, a band, a carrier, or a BWP;
in a case that test performance of a configured second target cell is lower than the measurement determining threshold, perform or skip performing a measurement on a cell prescribed by a protocol or configured by a network-side device other than the second target cell; or
in a case that measured performance of cells in a configured second target cell group is lower than the measurement determining threshold, perform or skip performing measurements on cells in a cell group prescribed by a protocol or configured by a network-side device other than the second target cell group.

Optionally, the measured performance includes at least one of the following: a reference signal received power RSRP, a reference signal received quality RSRQ, a signal to interference plus noise ratio SINR, channel state information CSI, a channel quality indication CQI, an L1 measurement result, or an L3 measurement result.

Optionally, when the indication information includes the second indication, the determining module is specifically configured to:
perform or skip performing a measurement on the target band, the second target carrier, the first target object, the first target cell group, and the reference signal indicated in the second indication.

Optionally, when the indication information includes the first indication and the second indication, the determining module 402 is specifically configured to:
in a case that a preset condition is met, perform or skip performing a measurement on the target band, the second target carrier, the first target object, the first target cell group, and the reference signal indicated in the second indication, where
the preset condition includes any one of the following:
   measured performance of a current serving second object is lower than the measurement determining threshold, where the second object includes a current serving cell, Pcell, SPcell, MCG, SCG, band, carrier, or BWP;
   test performance of a configured second target cell is lower than the measurement determining threshold; or
   measured performance of a cell in a configured second target cell group is lower than the measurement determining threshold.

Optionally, the terminal 400 further includes a processing module, where the processing module is configured to perform, after the determining a to-be-measured target object based on the indication information, at least one of the following:
performing at least one of L1, L2, and L3 measurements on the target obj ect;
performing L3 filtering for a measurement result of the target object; or
performing cell- and/or beam-level reporting of a measurement result of the target object.

The terminal provided by this embodiment of this disclosure can implement the processes implemented by the terminal in the method embodiment in FIG. 2. To avoid repetition, details are not described herein again.

FIG 5 is a structural diagram of a network-side device according to an embodiment of this disclosure. As shown in FIG. 5, the network-side device 500 includes:
a transmitting module 501, configured to transmit indication information to a terminal, where the indication information is used to indicate the terminal to determine a to-be-measured target object based on the indication information, where
the indication information includes a first indication and/or a second indication, where
the first indication is used to indicate a measurement determining threshold; and
the second indication is used to indicate at least one of the following:
   a first target carrier in a target band;
   a first cell corresponding to a second target carrier;
   a second cell in a first target cell group;
   a third cell or a third target carrier for a first object, where the first object is a primary cell Pcell, a secondary cell Scell, a primary secondary cell Pscell, or a secondary primary cell Spcell; or
   a reference signal of the first object.

Optionally, the target object includes at least one of the following:
a band or a reference signal on a band;
a carrier or a reference signal on a carrier;
a cell or a reference signal on a cell; or
a bandwidth part BWP or a reference signal on a BWP.

Optionally, the cell or the reference signal on the cell includes at least one of the following:
a secondary cell or a reference signal on a secondary cell;
a first target cell or a reference signal on a first target cell, where the first target cell is a primary cell Pcell, a primary secondary cell Pscell, or a secondary primary cell Spcell; or
a secondary cell group or a reference signal on a secondary cell group.

Optionally, a measurement result of the first target carrier represents a measurement result of the target band; or
a measurement result of the first cell represents a measurement result of the second target carrier; or
a measurement result of the second cell represents a measurement result of the first target cell group; or
a measurement result of the third cell, the third target carrier, or the reference signal represents a measurement result of the first object.

The network-side device provided in this embodiment of this disclosure can implement the processes implemented by the network-side device in the method embodiment in FIG. 3, which can reduce resource overheads for configuration. Details are not described herein again to avoid repetition.

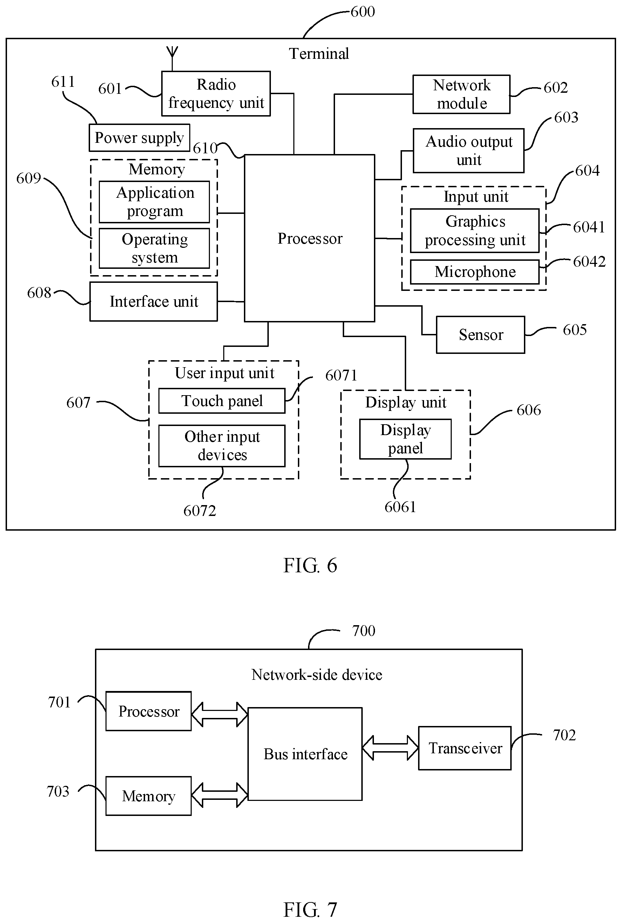

FIG. 6 is a schematic diagram of a hardware structure of a terminal for implementing the embodiments of this disclosure.

The terminal 600 includes but is not limited to components such as a radio frequency unit 601, a network module 602, an audio output unit 603, an input unit 604, a sensor 605, a display unit 606, a user input unit 607, an interface unit 608, a memory 609, a processor 610, and a power supply 611. A person skilled in the art may understand that the structure of the terminal shown in FIG. 6 does not constitute a limitation on the terminal. The terminal may include more or fewer components than those shown in the figure, or some components are combined, or component arrangements are different. In this embodiment of this disclosure, the terminal includes but is not limited to a mobile phone, a tablet computer, a notebook computer, a palmtop computer, an in-vehicle terminal, a wearable device, a pedometer, or the like.

The processor 610 is configured to receive indication information transmitted by a network-side device, and determine a to-be-measured target object based on the indication information, where
the indication information includes a first indication and/or a second indication, where
the first indication is used to indicate a measurement determining threshold; and
the second indication is used to indicate at least one of the following:
   a first target carrier in a target band;
   a first cell corresponding to a second target carrier;
   a second cell in a first target cell group;
   a third cell or a third target carrier for a first object, where the first object is a primary cell Pcell, a secondary cell Scell, a primary secondary cell Pscell, or a secondary primary cell Spcell; or
   a reference signal of the first object.

For specific content of the target object and a specific implementation process of determining a to-be-measured target object based on the indication information, reference may be made to the description in the method embodiment corresponding to FIG. 2. Details are not described herein again.

It should be understood that in this embodiment of this disclosure, the radio frequency unit 601 may be configured to receive and transmit information, or to receive and transmit a signal in a call process, and specifically, after receiving downlink data from a base station, transmit the downlink data to the processor 610 for processing; and also transmit uplink data to the base station. Generally, the radio frequency unit 601 includes but is not limited to an antenna, at least one amplifier, a transceiver, a coupler, a low noise amplifier, a duplexer, and the like. In addition, the radio frequency unit 601 may further communicate with a network and another device through a wireless communications system.

The terminal provides a user with wireless broadband internet access through the network module 602, for example, helping the user to transmit and receive e-mails, browse web pages, and access streaming media.

The audio output unit 603 may convert audio data received by the radio frequency unit 601 or the network module 602 or stored in the memory 609 into an audio signal, and output the audio signal as a sound. In addition, the audio output unit 603 may further provide audio output (for example, a call signal reception tone or a message reception tone) that is related to a specific function performed by the terminal 600. The audio output unit 603 includes a speaker, a buzzer, a receiver, and the like.

The input unit 604 is configured to receive an audio or video signal. The input unit 604 may include a graphics processing unit (Graphics Processing Unit, GPU) 6041 and a microphone 6042. The graphics processing unit 6041 processes image data of a static picture or a video obtained by an image capture apparatus (for example, a camera) in an image capture mode or a video capture mode. A processed image frame may be displayed on the display unit 606. An image frame processed by the graphics processing unit 6041 may be stored in the memory 609 (or another storage medium) or transmitted by the radio frequency unit 601 or the network module 602. The microphone 6042 is capable of receiving sounds and processing such sounds into audio data. The processed audio data may be converted in a telephone call mode into a format that can be transmitted by the radio frequency unit 601 to a mobile communications base station, for outputting.

The terminal 600 further includes at least one sensor 605, for example, an optical sensor, a motion sensor, and other sensors. Specifically, the optical sensor may include an ambient light sensor and a proximity sensor. The ambient light sensor may adjust luminance of the display panel 6061 based on brightness of ambient light, and the proximity sensor may turn off a display panel 6061 and/or backlight when the terminal 600 moves close to an ear. As a motion sensor, an accelerometer sensor may detect a value of an acceleration in various directions (there are usually three axes), may detect a value and a direction of gravity when the terminal is still, and may be configured to recognize a posture of the terminal (for example, landscape/portrait mode switching, a related game, or magnetometer posture calibration), provide a function related to vibration recognition (for example, a pedometer or a keystroke), or the like. The sensor 605 may further include a fingerprint sensor, a pressure sensor, an iris sensor, a molecular sensor, a gyroscope, a barometer, a hygrometer, a thermometer, or an infrared sensor. Details are not described herein.

The display unit 606 is configured to display information input by the user or information provided for the user. The display unit 606 may include the display panel 6061, and the display panel 6061 may be configured in a form of a liquid crystal display (Liquid Crystal Display, LCD), an organic light-emitting diode (Organic Light-Emitting Diode, OLED), or the like.

The user input unit 607 may be configured to receive input digit or character information, and generate key signal input that is related to user setting and function control of the terminal. Specifically, the user input unit 607 includes a touch panel 6071 and other input devices 6072. The touch panel 6071, also referred to as a touchscreen, may capture a touch operation performed by a user on or near the touch panel (for example, an operation performed by the user on the touch panel 6071 or near the touch panel 6071 by using a finger or any appropriate object or accessory such as a stylus). The touch panel 6071 may include two parts: a touch detection apparatus and a touch controller. The touch detection apparatus detects a touch azimuth of the user, detects a signal carried by a touch operation, and transmits the signal to the touch controller. The touch controller receives touch information from the touch detection apparatus, converts the touch information into point coordinates, transmits the point coordinates to the processor 610, and receives and executes a command transmitted by the processor 610. In addition, the touch panel 6071 may be implemented in multiple types, for example, as a resistive, capacitive, infrared, or surface acoustic wave touch panel. In addition to the touch panel 6071, the user input unit 607 may further include other input devices 6072. Specifically, the other input devices 6072 may include but are not limited to a physical keyboard, a function key (for example, a volume control key or a power on/off key), a trackball, a mouse, a joystick, and the like. Details are not described herein again.

Further, the touch panel 6071 may cover the display panel 6061. When detecting a touch operation on or near the touch panel 6071, the touch panel 6071 transmits the touch operation to the processor 610 to determine a type of a touch event. Then, the processor 610 provides a corresponding visual output on the display panel 6061 based on the type of the touch event. Although in FIG. 6, the touch panel 6071 and the display panel 6061 act as two independent parts to implement input and output functions of the terminal, in some embodiments, the touch panel 6071 and the display panel 6061 may be integrated to implement the input and output functions of the terminal. This is not specifically limited herein.

The interface unit 608 is an interface for connecting an external apparatus to the terminal 600. For example, the external apparatus may include a wired or wireless headphone port, an external power (or battery charger) port, a wired or wireless data port, a memory card port, a port for connecting an apparatus provided with a recognition module, an audio input/output (I/O) port, a video I/O port, an earphone port, and the like. The interface unit 608 may be configured to receive input (for example, data information and electric power) from the external apparatus, and transmit the received input to one or more elements in the terminal 600; or may be configured to transmit data between the terminal 600 and the external apparatus.

The memory 609 may be configured to store a software program and various data. The memory 609 may mainly include a program storage area and a data storage area. The program storage area may store an operating system, an application program required for at least one function (such as a sound play function and an image play function), and the like. The data storage area may store data created based on use of the mobile phone (such as audio data and a phone book), and the like. In addition, the memory 609 may include a high-speed random access memory, and may further include a non-volatile memory such as a disk storage device, a flash memory device, or another volatile solid-state storage device.

The processor 610 is a control center of the terminal, and is connected to all components of the terminal by using various interfaces and lines. By running or executing a software program and/or a module stored in the memory 609 and invoking data stored in the memory 609, the processor 610 executes various functions of the terminal and processes data, so as to perform overall monitoring on the terminal. The processor 610 may include one or more processing units. Optionally, the processor 610 may integrate an application processor and a modem processor. The application processor mainly processes an operating system, a user interface, an application program, and the like. The modem processor mainly processes wireless communication. It may be understood that the modem processor may alternatively not be integrated into the processor 610.

The terminal 600 may further include the power supply 611 (for example, a battery) supplying power to all components. Optionally, the power supply 611 may be logically connected to the processor 610 through a power management system. In this way, functions such as charge management, discharge management, and power consumption management are implemented by using the power management system.

In addition, the terminal 600 includes some functional modules that are not shown. Details are not described herein again.

Optionally, an embodiment of this disclosure further provides a terminal, including a processor 610, a memory 609, and a computer program stored in the memory 609 and capable of running on the processor 610. When the computer program is executed by the processor 610, the processes of the foregoing measurement method embodiments are implemented, with the same technical effects achieved. To avoid repetition, details are not described herein again.

FIG. 7 is a structural diagram of another network device according to an embodiment of this disclosure. As shown in FIG. 7, the network device 700 includes a processor 701, a transceiver 702, a memory 703, and a bus interface.

The processor 701 is configured to transmit indication information to a terminal, where the indication information is used to indicate the terminal to determine a to-be-measured target object based on the indication information, where
the indication information includes a first indication and/or a second indication, where
the first indication is used to indicate a measurement determining threshold; and
the second indication is used to indicate at least one of the following:
   a first target carrier in a target band;
   a first cell corresponding to a second target carrier;
   a second cell in a first target cell group;
   a third cell or a third target carrier for a first object, where the first object is a primary cell Pcell, a secondary cell Scell, a primary secondary cell Pscell, or a secondary primary cell Spcell; or
   a reference signal of the first object.

For specific content of the target object, reference may be made to the description in the method embodiment corresponding to FIG. 3. Details are not described herein again.

In FIG. 7, a bus architecture may include any quantity of interconnected buses and bridges, and specifically connect together various circuits of one or more processors represented by the processor 701 and a memory represented by the memory 703. The bus architecture may further interconnect various other circuits such as a peripheral device, a voltage regulator, and a power management circuit. These are all well known in the art, and therefore are not further described in this specification. The bus interface provides interfaces. The transceiver 702 may be a plurality of components, including a transmitter and a receiver, and provides units for communicating with a variety of other apparatuses on a transmission medium. For different user equipment, the user interface 704 may also be an interface capable of externally or internally connecting a required device, and the connected device includes but is not limited to a keypad, a display, a speaker, a microphone, a joystick, and the like.

The processor 701 is responsible for management of the bus architecture and general processing, and the memory 703 may store data used by the processor 701 when the processor 701 performs an operation.

Optionally, an embodiment of this disclosure further provides a network device, including a processor 701, a memory 703, and a computer program stored in the memory 703 and capable of running on the processor 701. When the computer program is executed by the processor 701, the processes of the foregoing measurement indication method embodiment are implemented, with the same technical effects achieved. To avoid repetition, details are not described herein again.

An embodiment of this disclosure further provides a computer-readable storage medium. The computer-readable storage medium stores a computer program, and when the computer program is executed by a processor, the processes of the measurement method on a terminal side provided in the embodiments of this disclosure are implemented, or when the computer program is executed by a processor, the processes of the measurement indication method on a network-side device provided in the embodiments of this disclosure are implemented, with the same technical effects achieved. To avoid repetition, details are not described herein again. For example, the computer-readable storage medium is a read-only memory (Read-Only Memory, ROM), a random access memory (Random Access Memory, RAM), a magnetic disk, an optical disc, or the like.

It should be noted that in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element.

According to the description of the foregoing implementations, a person skilled in the art can clearly understand that the method in the foregoing embodiments may be implemented by software on a necessary universal hardware platform or by hardware only. In most cases, however, the former is a more preferred implementation. Based on such an understanding, the technical solutions of this disclosure essentially or a part thereof that contributes to related technologies may be embodied in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a base station, or the like) to perform the methods described in the embodiments of this disclosure.

The foregoing describes the embodiments of this disclosure with reference to the accompanying drawings. However, this disclosure is not limited to the foregoing specific implementation manners. The foregoing specific implementation manners are merely illustrative rather than restrictive. As instructed by this disclosure, persons of ordinary skill in the art may develop many other manners without departing from principles of this disclosure and the protection scope of the claims, and all such manners fall within the protection scope of this disclosure.

## Claims

1. A measurement method, applied to a terminal and comprising:
receiving indication information transmitted by a network-side device; and
determining a to-be-measured target object based on the indication information, wherein
the indication information comprises a first indication and/or a second indication, wherein
the first indication is used to indicate a measurement determining threshold; and
the second indication is used to indicate at least one of the following:
a first target carrier in a target band;
a first cell corresponding to a second target carrier;
a second cell in a first target cell group;
a third cell or a third target carrier for a first object, wherein the first object is a primary cell Pcell, a secondary cell Scell, a primary secondary cell Pscell, or a secondary primary cell Spcell; or
a reference signal of the first object.

2. The method according to claim 1, wherein the target object comprises at least one of the following:
a band or a reference signal on a band;
a carrier or a reference signal on a carrier;
a cell or a reference signal on a cell;
a bandwidth part BWP or a reference signal on a BWP; or
a reference signal.

3. The method according to claim 2, wherein the cell or the reference signal on the cell comprises at least one of the following:
a secondary cell or a reference signal on a secondary cell;
a first target cell or a reference signal on a first target cell, wherein the first target cell is a Pcell, a Pscell, or a Spcell; or
a secondary cell group or a reference signal on a secondary cell group.

4. The method according to claim 1, wherein
a measurement result of the first target carrier represents a measurement result of the target band; or
a measurement result of the first cell represents a measurement result of the second target carrier; or
a measurement result of the second cell represents a measurement result of the first target cell group; or
a measurement result of the third cell, the third target carrier, or the reference signal represents a measurement result of the first object.

5. The method according to claim 1, wherein when the indication information comprises the first indication, the determining a to-be-measured target object based on the indication information comprises any one of the following:
in a case that measured performance of a current serving second object is lower than the measurement determining threshold, performing or skipping performing a measurement on a third object prescribed by a protocol or configured by a network-side device, wherein the second object comprises a current serving cell, Pcell, SPcell, master cell group MCG, secondary cell group SCG, band, carrier, or BWP; and the third object comprises a cell, a band, a carrier, or a BWP;
in a case that test performance of a configured second target cell is lower than the measurement determining threshold, performing or skipping performing a measurement on a cell prescribed by a protocol or configured by a network-side device other than the second target cell; or
in a case that measured performance of cells in a configured second target cell group is lower than the measurement determining threshold, performing or skipping performing measurements on cells in a cell group prescribed by a protocol or configured by a network-side device other than the second target cell group.

6. The method according to claim 5, wherein the measured performance comprises at least one of the following: a reference signal received power RSRP, a reference signal received quality RSRQ, a signal to interference plus noise ratio SINR, channel state information CSI, a channel quality indication CQI, an L1 measurement result, or an L3 measurement result.

7. The method according to claim 1, wherein when the indication information comprises the second indication, the determining a to-be-measured target object based on the indication information comprises:
performing or skipping performing a measurement on the target band, the second target carrier, the first target object, the first target cell group, and the reference signal indicated in the second indication.

8. The method according to claim 1, wherein when the indication information comprises the first indication and the second indication, the determining a to-be-measured target object based on the indication information comprises:
in a case that a preset condition is met, performing or skipping performing a measurement on the target band, the second target carrier, the first target object, the first target cell group, and the reference signal indicated in the second indication, wherein
the preset condition comprises any one of the following:
measured performance of a current serving second object is lower than the measurement determining threshold, wherein the second object comprises a current serving cell, Pcell, SPcell, MCG, SCG, band, carrier, or BWP;
test performance of a configured second target cell is lower than the measurement determining threshold; or
measured performance of a cell in a configured second target cell group is lower than the measurement determining threshold.

9. The method according to claim 1, wherein after the determining a to-be-measured target object based on the indication information, the method further comprises at least one of the following:
performing at least one of L1, L2, and L3 measurements on the target object;
performing L3 filtering for a measurement result of the target object; or
performing cell- and/or beam-level reporting of a measurement result of the target object.

10. A measurement indication method, applied to a network-side device and comprising:
transmitting indication information to a terminal, wherein the indication information is used to indicate the terminal to determine a to-be-measured target object based on the indication information, wherein
the indication information comprises a first indication and/or a second indication, wherein
the first indication is used to indicate a measurement determining threshold; and
the second indication is used to indicate at least one of the following:
a first target carrier in a target band;
a first cell corresponding to a second target carrier;
a second cell in a first target cell group;
a third cell or a third target carrier for a first object, wherein the first object is a primary cell Pcell, a secondary cell Scell, a primary secondary cell Pscell, or a secondary primary cell Spcell; or
a reference signal of the first object.

11. The method according to claim 10, wherein the target object comprises at least one of the following:
a band or a reference signal on a band;
a carrier or a reference signal on a carrier;
a cell or a reference signal on a cell;
a bandwidth part BWP or a reference signal on a BWP; or
a reference signal.

12. The method according to claim 11, wherein the cell or the reference signal on the cell comprises at least one of the following:
a secondary cell or a reference signal on a secondary cell;
a first target cell or a reference signal on a first target cell, wherein the first target cell is a Pcell, a Pscell, or a Spcell; or
a secondary cell group or a reference signal on a secondary cell group.

13. The method according to claim 10, wherein
a measurement result of the first target carrier represents a measurement result of the target band; or
a measurement result of the first cell represents a measurement result of the second target carrier; or
a measurement result of the second cell represents a measurement result of the first target cell group; or
a measurement result of the third cell, the third target carrier or the reference signal represents a measurement result of the first object.

14. A terminal, comprising:
a receiving module, configured to receive indication information transmitted by a network-side device; and
a determining module, configured to determine a to-be-measured target object based on the indication information, wherein
the indication information comprises a first indication and/or a second indication, wherein
the first indication is used to indicate a measurement determining threshold; and
the second indication is used to indicate at least one of the following:
a first target carrier in a target band;
a first cell corresponding to a second target carrier;
a second cell in a first target cell group;
a third cell or a third target carrier for a first object, wherein the first object is a primary cell Pcell, a secondary cell Scell, a primary secondary cell Pscell, or a secondary primary cell Spcell; or
a reference signal of the first object.

15. The terminal according to claim 14, wherein when the indication information comprises the first indication, the determining module is specifically configured to perform any one of the following:
in a case that measured performance of a current serving second object is lower than the measurement determining threshold, performing or skipping performing a measurement on a third object prescribed by a protocol or configured by a network-side device, wherein the second object comprises a current serving cell, Pcell, SPcell, master cell group MCG, secondary cell group SCG, band, carrier, or BWP; and the third object comprises a cell, a band, a carrier, or a BWP;
in a case that test performance of a configured second target cell is lower than the measurement determining threshold, performing or skipping performing a measurement on a cell prescribed by a protocol or configured by a network-side device other than the second target cell; or
in a case that measured performance of cells in a configured second target cell group is lower than the measurement determining threshold, performing or skipping performing measurements on cells in a cell group prescribed by a protocol or configured by a network-side device other than the second target cell group.

16. The terminal according to claim 14, wherein when the indication information comprises the second indication, the determining a to-be-measured target object based on the indication information comprises:
performing or skipping performing a measurement on the target band, the second target carrier, the first target object, the first target cell group, and the reference signal indicated in the second indication.

17. The terminal according to claim 14, wherein when the indication information comprises the first indication and the second indication, the determining a to-be-measured target object based on the indication information comprises:
in a case that a preset condition is met, performing or skipping performing a measurement on the target band, the second target carrier, the first target object, the first target cell group, and the reference signal indicated in the second indication, wherein
the preset condition comprises any one of the following:
measured performance of a current serving second object is lower than the measurement determining threshold, wherein the second object comprises a current serving cell, Pcell, SPcell, MCG, SCG, band, carrier, or BWP;
test performance of a configured second target cell is lower than the measurement determining threshold; or
measured performance of a cell in a configured second target cell group is lower than the measurement determining threshold.

18. A network-side device, comprising:
a transmitting module, configured to transmit indication information to a terminal, wherein the indication information is used to indicate the terminal to determine a to-be-measured target object based on the indication information, wherein
the indication information comprises a first indication and/or a second indication, wherein
the first indication is used to indicate a measurement determining threshold; and
the second indication is used to indicate at least one of the following:
a first target carrier in a target band;
a first cell corresponding to a second target carrier;
a second cell in a first target cell group;
a third cell or a third target carrier for a first object, wherein the first object is a primary cell Pcell, a secondary cell Scell, a primary secondary cell Pscell, or a secondary primary cell Spcell; or
a reference signal of the first object.

19. The network-side device according to claim 18, wherein the target object comprises at least one of the following:
a band or a reference signal on a band;
a carrier or a reference signal on a carrier;
a cell or a reference signal on a cell;
a band-width part BWP or a reference signal on a BWP; or
a reference signal.

20. The network-side device according to claim 19, wherein the cell or the reference signal on the cell comprises at least one of the following:
a secondary cell or a reference signal on a secondary cell;
a first target cell or a reference signal on a first target cell, wherein the first target cell is a Pcell, a Pscell, or a Spcell; or
a secondary cell group or a reference signal on a secondary cell group.

21. A terminal, comprising a memory, a processor, and a program stored in the memory and capable of running on the processor, wherein when the program is executed by the processor, the steps of the measurement method according to any one of claims 1 to 9 are implemented.

22. A network-side device, comprising a memory, a processor, and a program stored in the memory and capable of running on the processor, wherein when the program is executed by the processor, the steps of the measurement indication method according to any one of claims 10 to 13 are implemented.

23. A computer-readable storage medium, wherein the computer-readable storage medium stores a computer program, and when the computer program is executed by a processor, the steps of the measurement method according to any one of claims 1 to 9 are implemented; or when the computer program is executed by a processor, the steps of the measurement indication method according to any one of claims 10 to 13 are implemented.
